# EUROPEAN PATENT APPLICATION

(11) **EP 2 468 485 A1**
(43) Date of publication of application: **27.06.2012**
(21) Application number: 11195584.5
(22) Date of filing: 23.12.2011
(51) Int. Cl.: B29C 70/44, B29C 70/48, B29C 70/86, B29K 307/04

(54) **A method for integrating metallic elements into composite materials**

(30) Priority: 24.12.2010 ES 201031942
(71) Applicant: Airbus Operations S.L., 28906 Getafe, Madrid (ES)
(72) Inventor: Serrano Velaz, Cesar, 28905 Madrid (ES)
(74) Representative: Ungria Lopez, Javier

(57) **Abstract**

A method for integrating metallic components into composite materials comprising curing layers of composite fibres (2) in a tool (3) in conjunction with at least one metallic element (1), which is the metallic element (1) that is placed for the curing process in the exact position in which a final part (5) is intended to be placed, and the layers of composite fibres (2) are placed around the metallic element (1) and the final part (5) is obtained with at least one metallic element (1) completely integrated into a composite material (6).

## Description

### OBJECT OF THE INVENTION

The object of this invention is to provide a method for inserting metallic elements into composite materials. Specifically, this invention provides a method for inserting bushings or similar elements into composite materials.

An additional object of the invention is to ensure that the final part has the metallic element totally integrated inside it, such that it will not corrode.

When performing the method, there is no damage to the composite material or any delamination between the layers of fibres of the composite material. The mechanical properties of the final part are therefore not affected.

Another object of this invention is to provide a method that can be used with different classes of metallic elements, such as bushings, solid cylinders, swivel joints or any other element. As a result, different classes of bushings can be used in order to ensure high resistance of the final part to axial loads, rotational loads or a combination of different forces, depending on the metallic element used.

An additional object of the invention is to provide a method that is easy and cheap to perform. The complete insertion of the metallic element into the composite material is achieved during the manufacturing process itself, and the metallic element is completely integrated into the composite material after the manufacturing process.

### FIELD OF THE INVENTION

This invention lies within the field of the installation of metallic or non-metallic elements into components made in composite materials during the manufacturing process, by any process covered by the so-called Liquid Composite Molding (LCM) procedure and especially by the Resin Transfer Molding (RTM) and the Vacuum-Assisted Resin Transfer Molding (VARTM) processes. The elements installed are completely integrated into the composite laminate after the manufacturing process.

In particular, this application relates to a method for installing bushings, either hallow or not, intended for use in:
● Bushings for rotating bolts, pivots, etc.
● Bushings for installing bearings, swivel joints, etc. (clamping processes).
● Solid elements in order to allow the subsequent drilling of holes that must be perfectly aligned after the integration process.
● Etc.

### BACKGROUND OF THE INVENTION

The Liquid Composite Molding (LCM) manufacturing process relates to a manufacturing process for composite materials. The layers of dry composite fibres are placed within a metal tool or mould with a specific geometric configuration and size that depend on the intended end result. A resin is then inserted into the mould that fills in all free spaces and is cured. The orientation of the carbon layers is important, and also depends on the future use intended for the element obtained in general by any LCM process, and in particular by RTM and/or VACM.

When the layers of composite fibres are inside the tool, it is heated to a specific temperature and the resin is introduced into the tool at high pressure, such that the resin fills in any free space.

In particular, the manufacturing processes for which this invention has been developed are Resin Transfer Molding (RTM) and Vacuum-Assisted Resin Transfer Molding (VARTM). In the RTM process pressure is applied in order to inject the resin into the mould. In the VARTM process vacuum is used to introduce the resin into the mould, so that the resin enters into the mould by "absorption".

The final element obtained by LCM has a good surface finish, dimensional stability and the process itself can be highly automated and is cheap.

One patent known from the state of the art and related to the RTM process is Document US-6146122, which describes a mould for moulding a composite article. A plurality of holes is drilled into the top surface of the pressure plate and springs are placed in the holes. A laminated sheet is placed in the mould such that when the top mould is attached to the bottom mould the top mould compresses the springs, thus compressing the part of the laminated sheet firmly against the pressure plate and the core.

Another patent that is related to the RTM process is Document US-5855709, which describes a process for manufacturing a paddle for a flow stabiliser. The central body of the paddle is made in metal or in composite material and the paddles in composite material are interchangeable, or the paddles and the central body are injection moulded into a single part using the RTM method.

Additionally, Patent FR-2864801 describes a method comprising preparing moulding matrices and dies by low pressure injection or by Resin Transfer Moulding (RTM) and their use with self-supported metallic mould supports.

When inserting a metallic element into an element made in composite material it is not convenient to do so by interference fit. This interference fitting is obtained when the diameter of the inner part of the joint, the male part, is greater than the diameter of the shell part or housing the female part. If the interference fitting is used to introduce a metallic element into a composite material, delaminations may appear between the layers of the composite structure. The composite structure may also be damaged. The result is a loss of the mechanical properties of the assembly.

Specific processes are sometimes used when it is necessary to install metallic components into composite materials, although there is a high risk of the aforementioned problems occurring, such as delaminations, damage to the composite material fibres, etc.

A typical procedure is to introduce, or embed, the metallic components into the composite material casing. A pressurised installation or another equivalent process is used, such as heat shrinking, for example. There is a high risk of delamination of the composite material when inserting the bushing, or even during expansion of the bushing when hardened at room temperature. It must also be considered that the male/female tightening tolerances required by this type of fitting are very high.

Another process consists in introducing the metallic component using a clearance fit. This fit is obtained between two parts when the diameter of the inner part, the male part, is smaller than the diameter of the casing part, the female part. After introducing the metallic component, the inner diameter expands by introducing a mandrel with a greater diameter than the inner diameter of the metallic component. The metallic component therefore expands and remains with the interference fit inside the composite material part after the process. The same problems may appear as explained above (delaminations, difficulty in achieving the tightening tolerances required for this type of assemblies, high cost for obtaining the required tolerances, etc.).

As well as the problems described above and the high cost of both these installation processes, they do not hold the bushings adequately for cases in which the assembly has to bear axial or rotation loads.

When applying these processes to metallic materials, in particular when installing bushings in composite materials, some designs provide a "groove" or "bevel" in the bushing or in the casing. This allows underpinning/clamping one element into the other in order to increase the holding of the bushing in the composite material. The problem is that this may lead to delamination or breakage of the composite material fibres.

It is therefore desirable to find a method for installing metallic components in composite materials that solves the problems caused by the processes described above, which are:
- Difficulty when installing bushings, cylinders, bearings, swivel joints or any other element into composite material components or structures with an interference fit.
- Delaminations and/or broken fibres in the composite material during the installation process.
- Risk of losing the element during its lifetime, since its clearance allows axial movements or movements caused by vibrations.
- Low capacity for bearing axial loads and rotational torque.
- High cost.

### DESCRIPTION OF THE INVENTION

This invention is designed to overcome the drawbacks mentioned above, present in the processes known in the state of the art for introducing metallic components into composite materials.

The present invention discloses a method for introducing a metallic element into composite material comprising "curing" layers of dry fibres in a tool or mould in conjunction with at least one metallic element, which is a metallic element that has been placed for the curing process in the exact position in which it is to be in the final part, and the layers of dry composite fibre are placed around the metallic element, thus producing a final part with at least one metallic element integrated into the composite material.

The main advantage of the invention is to obtain a final part with a metallic element that is totally integrated in a composite material without affecting the mechanical properties of the assembly, without damaging the composite material and without causing the delamination of the layers of composite fibre during the installation of the metallic element. In order to achieve this result, the most important contribution of this invention is to perform the curing of the layers of carbon fibre together with the metallic element.

The at least one metallic element and the layers of carbon fibres can be placed together in the tool or mould. It is also possible to place the metallic element in the tool before anything else, and then placing the layers of dry carbon fibres around the metallic element. The order for placing the metallic element and the layers of dry carbon fibres in the tool depends on the tool itself, the size of the components, the process used, etc.

The metallic element must be placed in its position in the final part obtained applying this process. Once the layers of dry carbon fibre are cured we obtained a final part with the metallic element totally integrated into the composite material such that it is not possible to change the position of the metallic element.

This method is designed especially to integrate the metallic element into the composite material during an RTM process, such that the method involves, once the at least one metallic element and the layers of dry carbon fibres are within the tool, closing and heating the tool or mould to a specific temperature, and when this temperature is reached, introducing resin into the tool under pressure, such that the resin fills all the empty spaces.

The method is designed, more specifically, to integrate the metallic element into the composite material during the "layering" operations of the RTM process, comprising the placing of the layers of dry carbon fibre.

The method can also be used in processes using VARTM (Vacuum-Assisted RTM). In these cases, the method involves, once the at least one metallic element and the layers of dry carbon fibres are within the tool, closing and heating the tool and introducing resin in the tool under vacuum, such that the resin fills all the empty spaces.

The metallic element to be integrated in the composite material can be a friction bushing for shafts/bolts, a solid cylinder for centring holes, a bushing (for the installation of additional swivel joints by clamping), etc.

When using the method proposed by this invention, the final part obtained does not require any additional processes.

When using the method of the present invention, installation of the metallic element in the composite material can be designed and manufactured to support very high axial loads, torque, combined load systems, etc.

In a preferred embodiment of the present invention, when installing a bushing into composite materials, the surface of the bushing to be used has a shape that is adapted to the loads to be supported by the final part.

The metallic element to be used in this case can have a surface manufactured with longitudinal swages or grooves, cylindrical swages or grooves, cross-sectional swages or grooves, milling, etc. Additionally, it may be manufactured with "flanges" on its ends (flat or countersunk) that either individually or in addition to the solutions indicated would increase the mechanical properties of the element.

The metallic element to be used can be designed and manufactured to support any kind of load intended for the final part, which can be installed in any case very easily using the method proposed herein, and finally remaining completely integrated into the component after manufacture.

One of the most important advantages of the method of this invention is that the composite material is not damaged and there is no delamination of the layers of compound fibres during the installation of the metallic element.

Another important advantage of using the method of this invention is that there is no risk of losing the metallic element or of this migrating during the lifetime of the final part.

Also, the method of this invention is very useful in that it provides an easy and cheap installation process, since the installation of the metallic component is made during the manufacturing process of the composite material itself, without requiring any additional operations or processes. The metallic element is completely integrated into the composite material after the manufacturing process.

Since the metallic material is completely integrated into the composite material there is no risk of entry of water or electrolytes, thus avoiding corrosion problems.

The method of this invention also allows the use of different metallic elements, such as bushings, solid cylinders, bearings or any other element into composite material components. The method also allows using metallic elements with surfaces adapted to the loads to be supported by the final part. The final parts can therefore bear axial loads, rotating torque, combined forces, etc.

This method also allows installing several metallic elements during the same process. There is also the possibility of inserting solid parts that could be machined by boring, reaming, etc., after the manufacturing process of the component, in order to achieve a perfect centring/alignment between the parts to be assembled or to allow the rotation of axes through them.

When a bushing is inserted into composite materials, the sleeve installed can be used to install bearings, swivel joints, etc. In such cases, the bushings installed have bevelled edges of the surface of their inner diameter in order to swage the bearings or swivel joints placed inside the inner diameter of the bushings.

### BRIEF DESCRIPTION OF THE DRAWINGS

This invention shall be understood entirely based on the following detailed description of its preferred embodiments and the drawings enclosed are submitted only as an example and are therefore not limiting of the scope of the present invention. In the figures:
Figure 1 shows the process for installing metallic components into composite materials. Figure 1a shows the metallic element and the layers of dry carbon fibres together. The metallic element and the layers of dry carbon fibres are placed following a desired geometry for final part. Figure 1b shows the heating of the tool and the insertion of the resin. Figure 1c shows the final part produced using the method of this invention.

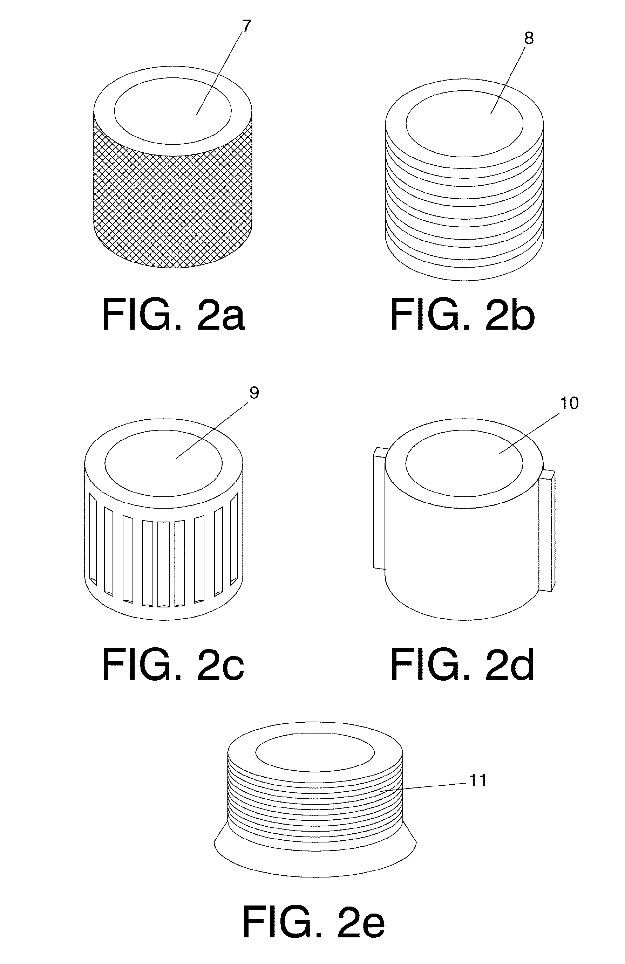

Figure 2 shows different bushings that can be used with the method of this invention. Figure 2a shows a metallic element with a milled surface that can provide high resistance to high axial and rotational loads. Figure 2b shows a metallic element with a horizontal swaged surface that provides high resistance to axial loads. Figure 2c shows a metallic element with a vertical swaged surface that provides high resistance to rotational loads. Figure 2d shows a metallic element with additional sides that provides high resistance to rotational loads. Figure 2e shows a metallic element with one end inserted or with a flat end that supports very high axial loads and can prevent delamination or other damage to the composite material.
Figure 3 shows a final part in which the metalling elements have been inserted into the composite material following the method of this invention.
Figure 4 shows a bushing that has been inserted into the composite material and that is being used to install a bearing.

### Reference numbers:

1: metallic element
2: composite material fibres
3: tool
4: resin
5: finished part
6: composite material
7: metallic element with a milled surface
8: metallic element with a horizontally underpinned surface
9: metallic element with a vertically underpinned surface
10: metallic element with additional sides
11: metallic element with one end inserted
12: sleeve with bevels on the edges
13: bearing

### DESCRIPTION OF A PREFERRED EMBODIMENT

The following description is provided only for the benefit of the reader and is not intended to limit the invention as disclosed in the claims in any way.

The present invention proposes a method for integrating metallic elements into composite materials. The method comprises curing layers of dry composite fibres (2) in a tool or mould (3) in conjunction with at least one metallic element (1), which is the metallic element (1) that is placed for the curing process in the exact position in which a final part (5) is intended to be placed, and the layers of dry composite fibres (2) are placed around the metallic element (1) and the final part (5) is obtained with at least one metallic element (1) completely integrated into a composite material (6).

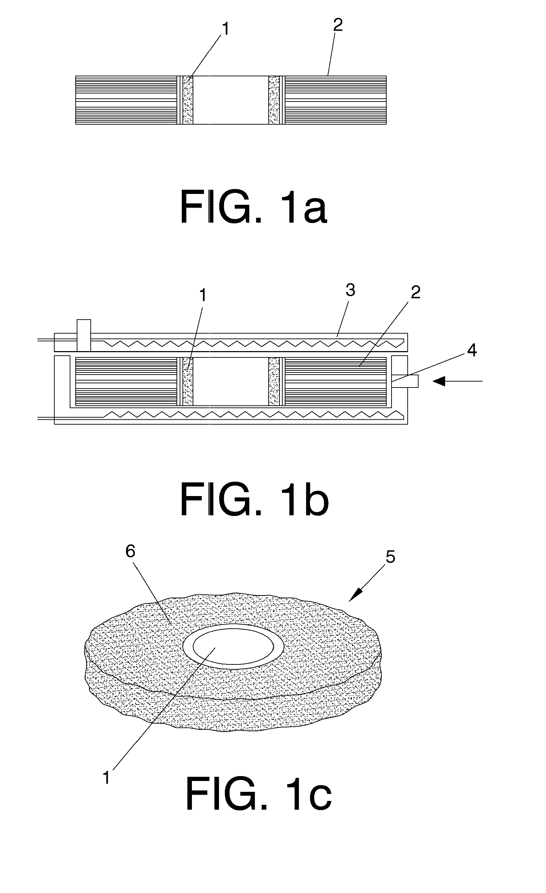

Figure 1a shows the metallic element in its future position and surrounded by the dry composite fibres.

Figure 1b shows the curing process of the layers of dry carbon fibres.

The procedure proposed in this application produces a final part (5) and the metallic element (1) is totally integrated into a composite material (6). This is shown in Figure 1c.

The complete insertion of the metallic element into the composite material is achieved during the manufacturing process itself, and the metallic element is completely integrated into the composite material after the manufacturing process. There is no need for additional operations.

One of the most important advantages of the method proposed herein is that the metallic element to be inserted into the composite material can have a special surface that depends on the loads to be supported by the final part.

Furthermore, the method of this invention also allows the use of different metallic elements, such as bushings, solid cylinders, bearings, swivel joints or any other element into composite material components.

The method also allows the use of metallic elements with surfaces adapted to the loads to be supported by the final part. The final parts can therefore bear axial loads, rotating torque, combined forces, etc.

Figure 2a shows a metallic element with a milled surface. This type of surface provides high resistance to high axial and rotational loads. Figure 2b shows a metallic element with a horizontal grooved surface. This type of surface provides high resistance to axial loads. Figure 2b shows a metallic element with a vertical grooved surface. This type of surface provides high resistance to rotational loads. Figure 2d shows a metallic element with additional sides. This type of metallic element provides high resistance to rotational loads. Figure 2e shows a metallic element with a flat end or an inserted end.

A metallic element with a flat end or an inserted end can be used (shown in Figure 2e) and also in one of the configurations shown in Figures 2a, 2b, 2c or 2d. A metallic element with a combination of these configurations holds very high axial loads and helps prevent delamination or other damage to the composite material.

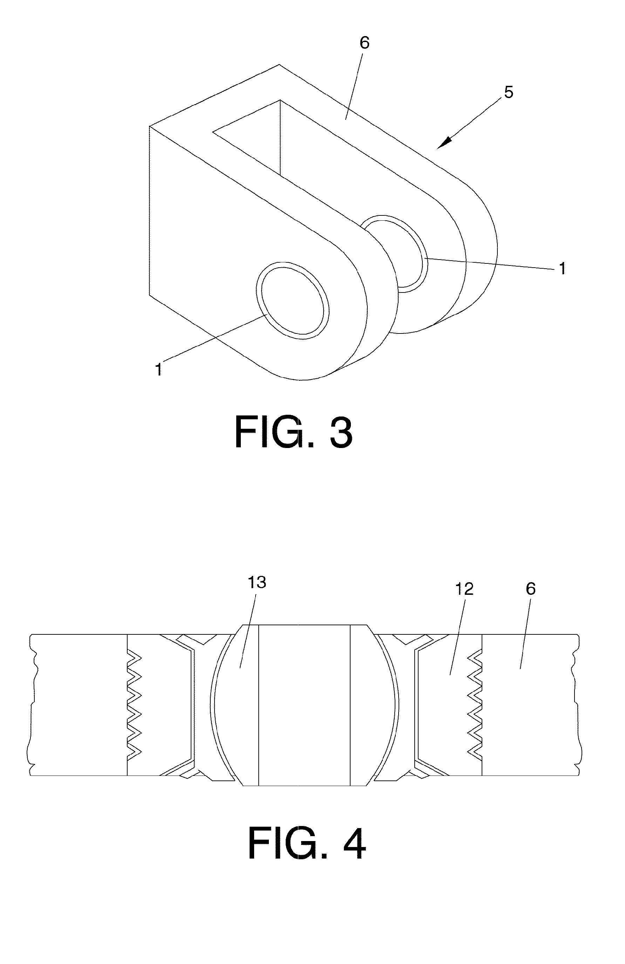

One advantage of the method of this invention is that more than one metallic element can be integrated into the composite material at the same time. A final part obtained with more than one totally integrated metallic element can be seen in Figure 3.

Figure 4 shows an application of the method of this invention in which the method has been used to integrate a sleeve into a composite material, such that the integrated sleeve can be used to install bearings. In these cases, the integrated sleeve should have bevelled edges on the surface of its inner diameter in order to underpin a bearing that could be placed in the inner diameter of the sleeve.

## Claims

1. A method for integrating metallic components into composite materials comprising curing layers of dry composite fibres (2) in a tool (3) in conjunction with at least one metallic element (1), which is the metallic element (1) that is placed for the curing process in the exact position in which a final part (5) is intended to be placed, and the layers of dry composite fibres (2) are placed around the metallic element (1) and the final part (5) is obtained with at least one metallic element (1) completely integrated into a composite material (6).

2. A method for integrating metallic elements into composite materials according to claim 1, wherein the at least one metallic element (1) used is a bushing.

3. A method for integrating metallic elements into composite materials according to claim 1, wherein the method comprises, once the at least one metallic element (1) and the layers of dry carbon fibres (2) are within the tool or mould (3), closing and heating the tool (3) and introducing resin (4) into the tool (3) under pressure, such that the resin fills all the empty spaces.

4. A method for integrating metallic elements into composite materials according to claim 1, wherein the method comprises, once the at least one metallic element (1) and the layers of dry carbon fibres (2) are within the tool (3), closing and heating the tool (3) and introducing resin (4) into the tool (3) under vacuum, such that the resin fills all the empty spaces.
